# EUROPÄISCHE PATENTSCHRIFT

(11) **EP 0 583 849 B1**
(45) Veröffentlichungstag und Bekanntmachung des Hinweises auf die Patenterteilung: **08.01.1997**
(21) Anmeldenummer: 93202430.0
(22) Anmeldetag: 18.08.1993
(51) Int. Cl.: B65G 23/00, B65G 23/44

(54) **Förderbandeinheit**
Conveyor belt unit
Unité de bande transporteuse

(30) Priorität: 19.08.1992 NL 9201475
(43) Veröffentlichungstag der Anmeldung: 23.02.1994
(73) Patentinhaber: KERKHOF, Martinus, Wilhelmus, Johanus, NL-5492 NL Sint-Oedenrode (NL)
(72) Erfinder: Clerx, Henricus Patrus Maria, NL-5991 PT Baarlo (NL)
(74) Vertreter: Timmers, Cornelis Herman Johannes

(56) Entgegenhaltungen:
- DE-B- 1 024 885
- DE-C- 694 514
- FR-A- 2 247 136
- NL-A- 6 915 393
- US-A- 4 171 044

## Beschreibung

Die Erfindung betrifft eine Förderbandeinheit mit einem endlosen, über eine erste und eine zweite, sich quer zur Transportrichtung erstreckende Abstützung geführten Förderband, das mit einer stromaufwärts gelegenen Antriebseinrichtung und Bandführungsmitteln zusammenwirkt,
Derartige Förderbandeinheiten sind in den unterschiedlichsten Varianten an und für sich bekannt - siehe z.B. US-A-4 171 044. Meistens werden dabei die Abstützungen durch eine zylindrische Antriebsrolle und eine zylindrische Umleitungsrolle gebildet, die mit einer Bandspannvorrichtung zusammenwirken.

Alle bekannten Vorrichtungen haben den Nachteil, daß das Förderband nur dann weiterhin genau die Spur hält, wenn in Kombination alle nachfolgenden Anforderungen erfüllt werden:
- Sowohl die Rollen als auch das Förderband sind rein zylindrisch und die Rollen sind exakt parallel zueinander ausgerichtet.
- Der Reibwert zwischen Band und Rollenoberfläche ist überall exakt gleich.
- Es wirken auf das Förderband keine Querkräfte ein und
- senkrecht zur Förderbandebene wirken keine asymmetrischen Kräfte ein.

Es wird deutlich, daß diese Kombination von Bedingungen in der Praxis nie erfüllt wird, so daß immer Steuereinrichtungen notwendig sind, um das Band auszusteuern. Diese Steuereinrichtungen bilden eine erhebliche Komplikation der Förderbandeinheit. So ist gemäß US-A-4 171 044 die Förderbandeinheit, bestehend aus Rollen und Band, in einem kasten förmigen Gehäuse, dessen Wände das Band führen, und das Bandunterstützungen besitzt, aufgenommen

Aufgabe der Erfindung ist es, diesen Nachteil zu beheben und eine Förderbandeinheit zu schaffen, wobei mit sehr einfachen Bandführungsmitteln das Band weiterhin genau die Spur hält.

Diese Aufgabe wird erfindungsgemäß gelöst durch eine stromabwärts liegende Vorrichtung zum Ausüben einer Bremsmomentes auf das auflaufende Trum des Bandes derart, daß in diesem Trum zwischen der Bremsvorrichtung und der Antriebseinrichtung eine Zugspannung eintritt, wobei die Bandlänge derart gewählt ist, daß das zwischen der Antriebseinrichtung und der Bremsvorrichtung befindliche rücklaufende Trum des Bandes spannungslos ist und die Bandführungsmittel der Einrichtung zum Ausüben des Bremsmomentes in Bezug auf die Laufrichtung des Bandes vorgeordnet sind.

Überraschenderweise hat sich herausgestellt, daß mit diesen sehr einfachen Mitteln ein exaktes Spurhalten des Bandes verwirklicht wird. Komplizierte Bandführungsmittel entfallen.

In einer bevorzugten Ausführungsform wird das Band über den Außenumfang einer ersten, stromabwärts gelegenen Leitrolle und den Außenumfang einer zweiten, stromaufwärts gelegenen Leitrolle geführt, wobei jeweils eine dieser Leitrollen unter Druck mit einer stromabwärts liegenden ersten Preßrolle, beziehungsweise einer Zweiten stromaufwärts liegenden Preßrolle zusammenwirkt. So wird das Band zwischen den jeweiligen Leitrollen und Preßrollen geführt.

Das Band kann am stromaufwärts gelegenen Ende über eine bewegliche Abstützung geführt werden, wobei sich die stromaufwärts liegende Leitrolle mit der damit zusammenwirkenden Preßrolle im Bereich zwischen der Abstützung und der stromabwärts liegenden Leitrolle befinden.

Eine derartige Anordnung wird dadurch ermöglicht, daß das rücklaufende Trumm des Bandes eine erhebliche Länge haben kann, wodurch eine Ausziehverlängerung der stromaufwärts gelegenen Abstützung ermöglicht wird. Dies bietet interessante Möglichkeiten für das intermittierende Übertragen von auf dem Band sich befindenden Gegenständen auf ein zweites Förderband in einiger Entfernung oder auf eine feste Abstützung.

Ausführungsformen der Einrichtung für das Ausüben des Bremsmomentes sind in den Ansprüchen 4 bis 6 definiert, während eine Ausführungsform der Positionierungsmittel in Anspruch 7 definiert ist.

Normalerweise wird das auflaufende Bandtrum das Fördertrum bilden und dabei über dem rücklaufenden Bandtrum liegen. Jedoch ist die umgekehrte Situation möglich, also eine Lage in der das rucklaufende Bandtrum das Fördertrum bildet, das über dem auflaufenden Bandtrum liegt und dabei zum Beispiel durch Stützrollen abgestützt wird. Dies bietet die Möglichkeit, Gegenstände über dieses Bandtrum von einem tiefer gelegenen Niveau auf ein höheres Niveau zu befördern, wie auch Gegenstände durch eine Behandlungsvorrichtung hindurch zu transportieren.

Die Erfindung wird anhand der Zeichnung erläutert. Es zeigt:
- Fig. 1: eine Seitenansicht einer erfindungsgemäßen Förderbandeinheit anhand deren das Prinzip der Erfindung erläutert wird.
- Fig. 2: ist eine Draufsicht dieser Ausführungsform.
- Fig. 3: zeigt ein Beispiel einer Ausführungsform für das gleitende Abbremsen der nicht angetriebenen Leitrolle.
- Fig. 4 und 5: zeigen jeweils in Draufsicht und in Seitenansicht eine zweite Ausführungsform einer Einrichtung für das gleitende Abbremsen der nicht angetriebenen Bandführungsrolle.
- Fig. 6a und 6b: zeigen Ausführungsformen bei denen die stromaufwärts gelegene Abstützung in Bandbewegungsrichtung 16 verstellbar ist.
- Fig. 7: zeigt eine Ausführungsform bei der das rücklaufende Bandtrum das Fördertrum bildet, über dem auflaufenden Bandtrum liegt und durch Stützrollen abgestützt wird.
- Fig. 8: zeigt eine Ausführungsform bei der ebenfalls das rücklaufende Bandtrum über dem auflaufenden Bandtrum liegt und als Fördertrum verwendet wird, um Gegenstände durch eine Behandlungsvorrichtung hindurch zu transportieren.

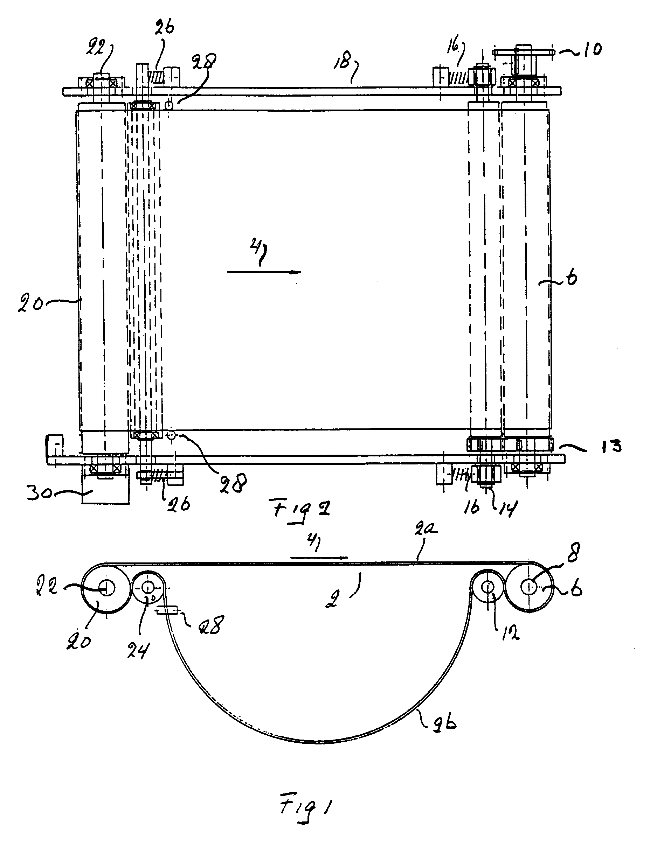

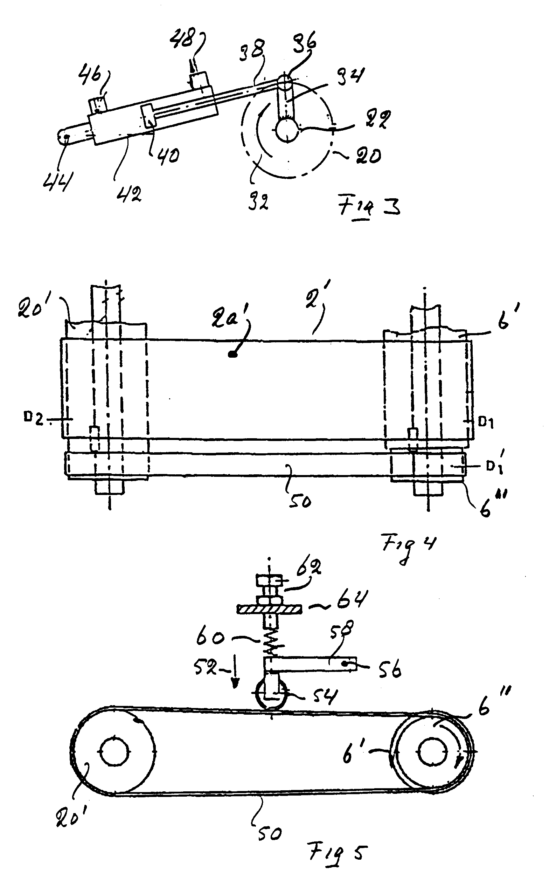

In den Figuren 1 und 2 wird mit dem Bezugszeichen 2 ein Förderband mit dem auflaufenden, gespannten Bandtrum 2a und dem rücklaufenden, losen Bandtrum 2b angedeutet; dieses Band wird in Pfeilrichtung 4 angetrieben. Dieses Antreiben erfolgt mittels der Antriebsrolle 6 mit der Achse 8, auf der ein Antriebskettenrad 10 angeordnet ist, das zusammenwirkt mit einem weiter nicht gezeichneten geeigneten Antrieb in Kombination mit einer Preßrolle 12 mit Achse 14, die mittels Federn 16 an die Antriebsrolle 6 angedrückt gehalten wird. Das Ganze ist in einem schematisch gezeichneten Rahmen 18 gelagert. Hier ist das Bandtrum 2a das Fördertrum. Figur 2 zeigt eine Ausführungsform in der die Rolle 12 über das Zahnradsystem 13 von der Antriebsrolle 6 aus angetrieben wird; die Rolle 12 kann jedoch auch freidrehend aufgeführt sein.

Stromabwärts gibt es eine zweite, nicht angetriebene Leitrolle 20, die frei um die Achse 22 rotieren kann und mit der zweiten Preßrolle 24, die mittels der Federn 26 an die Rolle 20 angedrückt gehalten wird, zusammenwirkt. Das Band 2 wird zwischen den Rollen 6 und 12 einerseits und den Rollen 20 und 24 andererseits geführt.

In Bandbewegungsrichtung sind, kurz vor der zweiten Preßrolle 24, an beiden Seiten des Bandes zwei Führungsstifte 28 angeordnet.

Damit gesichert ist, daß das Fördertrum 2a stets gestrafft bleibt, also immer gespannt ist, muß die Leitrolle 20 gleitend abgebremst werden, was durch eine mit der Achse 22 dieser Rolle 20 gekuppelte, in Figur 2 schematisch angedeutete gleitende Bremsvorrichtung 30 verwirklicht wird.

Überraschenderweise hat sich herausgestellt, daß mit den oben beschriebenen einfachen Maßnahmen, bei denen wesentlich ist, daß im rücklaufenden Bandtrum 2b keine Spannung eintritt, ohne zusätzliche Maßnahmen eine perfekte Führung des auflaufenden Bandtrums 2a erzielt wird. Sehr einfache Führungseinrichtungen für dieses rücklaufende Bandtrum 2b, wie die in den Figuren 1 und 2 angedeuteten Stifte 28, die dafür sorgen, daß das auflaufende Bandtrum 2a in der richtigen Lage auf die zweite Preßrolle 24 gelangt, haben sich als ausreichend herausgestellt.

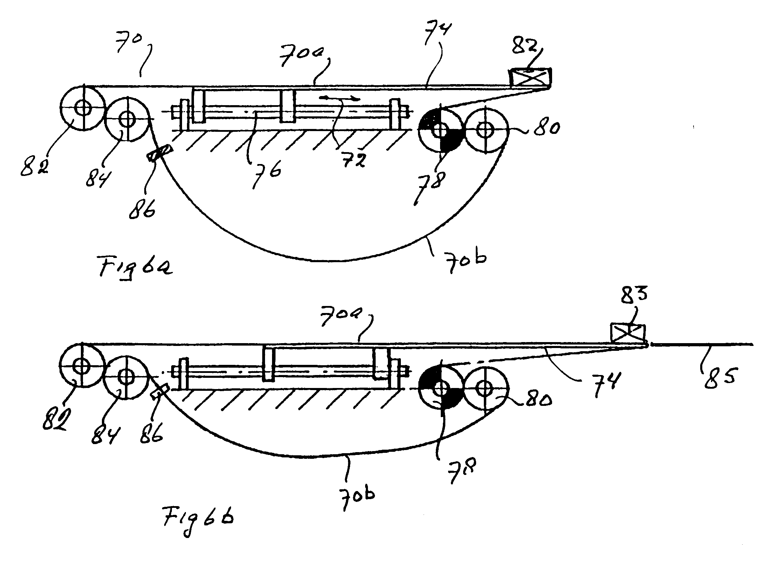

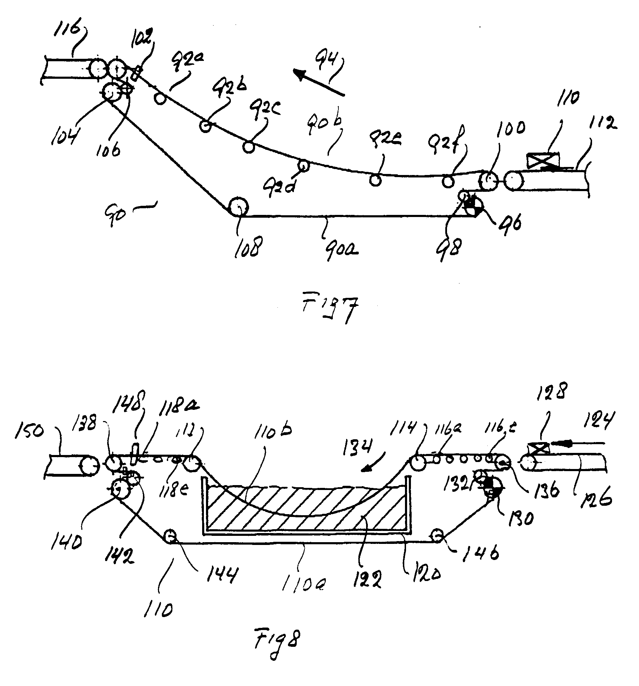

Figur 3 einerseits und die Figuren 4 und 5 andererseits zeigen einfache Mechanismen für das gleitende Abbremsen der Rolle 20. Gemäß Figur 3 ist die Achse 22 der Rolle 20, die in Pfeilrichtung 32 rotiert, mit einer Kurbel 34 verbunden, die bei 36 an die Kolbenstange 38 angelenkt ist, deren anderes Ende einen Kolben 40 trägt, der im Zylinder 42 einer bei 44 gelenkig befestigten Luftdämpfeinrichtung mit an den beiden Zylinderenden eine verstellbare Drosselöffnung 46, 48 gelagert ist. Deren Einstellung bestimmt die Bremswirkung. Um eine gleichmäßige Wirkung zu erzielen, kann an jeweils einem Ende der Achse 22 eine derartige Bremsvorrichtung angeordnet sein, deren jeweilige Kurbeln über 90° relativ zueinander angeordnet sind.

Die Figuren 4 und 5 zeigen schematisch eine Ausführungsform, bei der das Band 2' einerseits über eine angetriebene Rolle 6' und andererseits über eine Leitrolle 20' geführt ist; die damit zusammenwirkenden Preßrollen sind in dieser Figur nicht gezeichnet. Die angetriebene Rolle 6' mit dem Durchmesser D1 (dem Durchmesser D2 der Rolle 20' gleich) ist um einen Teil 6'' mit dem Durchmesser D1' vergrößert worden, der kleiner ist als D1. Über diesen Teil D1' und das Ende der Rolle 20' ist ein endloser Treibriemen 50 geführt, der wie Figur 5 zeigt durch eine in Pfeilrichtung 52 wirkende Spannvorrichtung unter Vorspannung gehalten wird. Diese Spannvorrichtung besteht aus einer Preßrolle 54, die getragen wird von einem um den Gelenkpunkt schwenkbaren 56 Kipphebel 58, der zusammen mit einer Druckfeder 60 und einer Stellschraube 62, im schematisch angedeuteten Rahmen 64 ist. Weil der Durchmesser D1' des Teiles 6'' kleiner ist als der Durchmesser D2 der Rolle 20' neigt dieser Teil dazu, die Rolle 20' mit einer niedrigeren Geschwindigkeit anzutreiben als die, mit der das Band 2' diese Rolle antreibt, so daß eine gleitende Bremswirkung eintritt, die zur Folge hat, daß der obere Teil 2a' des Bandes 2' gespannt bleibt.

Wie aus dem Vorhergehenden deutlich wird, kann das rücklaufende Trum 2b beziehungsweise 2b' des Förderbandes über eine größere Entfernung frei durchhängen. Dies bietet interessante Anwendungsmöglichkeiten, von denen eine erste Möglichkeit anhand der Figuren 6a und 6b beschrieben wird.

Figur 6a zeigt, wie der obere Teil 70a, das hier das Fördertrum bildet, eines insgesamt mit dem Bezugszeichen 70 angedeuteten Förderbandes durch eine in Richtung der Pfeile 72 hin und her bewegliche flache Stützplatte 74 abgestützt wird, dies unter Einfluß eines nicht näher detaillierten Antriebsmechanismus 76 und zwar von der aus Figur 6a gezeichneten Position aus bis in die in Figur 6b gezeichnete Position, und umgekehrt. Die Treibrolle ist mit 78 gekennzeichnet, die damit zusammenwirkende Preßrolle mit 84. Die Seitenführung des Bandes ist schematisch gezeichnet und mit dem Bezugszeichen 86 versehen. Das ablaufende Bandtrum ist mit 70b gekennzeichnet.

Eine derartige Ausführungsform kann verwendet werden, wenn ein am Ende des Transportes 70 vorhandener Gegenstand 83 über eine Entfernung, die dem Verlängerungsabstand des Antriebsmechanismus 76 entspricht, auf eine andere Abstützung, zum Beispiel auf ein sich quer zum Förderband 70 bewegendes Förderband 85 gebracht werden soll.

Eine andere interessante Anwendungsmöglichkeit zeigt Figur 7. Hier liegt das rücklaufende Trum 90b nicht an der unteren Seite der Einheit, sondern an der oberen Seite und ruht dabei auf einer Anzahl von Stützrollen 92a..92f; die Bewegungsrichtung des Bandes ist mit dem Pfeil 94 gekennzeichnet. Die das Band antreibende Rolle ist mit 96 gekennzeichnet; diese Rolle wirkt mit der Preßrolle 98 zusammen. Nach dem Passieren dieser Rolle kommt das ablaufende Trumm 90b über die Leitrolle 100 auf die Aufwärtsstrecke und passiert die Seitenführungen 102 und die abgebremste Rolle 104 mit der damit zusammenwirkenden Preßrolle 106, wobei der Teil zwischen der abgebremsten Rolle 104 und der Antriebsrolle 96 - also der gespannte Teil - noch über die Leitrolle 108 geführt ist. Eine derartige Ausführungsform 2, bei der das rücklaufende Trum den Fördertrum bildet, kann verwendet werden, um zugeführte Gegenstände auf ein höheres Förderniveau zu bringen, wie zum Beispiel den schematisch angedeuteten Gegenstand 110, der auf einem Förderband zugeführt wird, und der auf ein höheres Förderniveau auf das Förderband 116 geführt wird.

Ein letztes Beispiel der vielseitigen Anwendungsmöglichkeiten der erfindungsgemäßen Einheit zeigt Figur 8. Auch hier befindet sich das auflaufende Trum 110a des Förderbandes 110 an der unteren Seite der Einheit, während das rücklaufende Trum 110b, das über die Leitrollen 112, 114 und über eine Anzahl von kleineren Leitrollen 116a-116e beziehungsweise 118a-118e geführt wird und hier das Fördertrum bildet, durch einen Behälter 120 mit einer Behandlungsflüssigkeit durchhängt. So können in Pfeilrichtung 124 über das Förderband 126 zugeführte Gegenstände 128 durch dieses Bad hindurchgeführt werden, um dort einer bestimmten Behandlung unterzogen zu werden. In dieser Figur ist die angetriebene Rolle mit 130, und die damit zusammenwirkende Preßrolle mit 132 angedeutet; das sich in Pfeilrichtung 134 bewegende rücklaufende Trum wird über die Leitrolle 136 geführt und passiert am anderen Ende der Vorrichtung über die Leitrolle 138 die abgebremste Rolle 140 mit der damit zusammenwirkenden Preßrolle 142. Das nachgeschaltete auflaufende Trum 110a wird anschließend über die Leitrollen 144 und 146 geführt. Auch hier sind in kurzem Abstand vor der abgebremsten Rolle 140 schematisch angedeutet Seitenführungen 148 angeordnet.

Die in diesem Bad 120 behandelten Gegenstände werden nach dem Passieren des Bades auf dem Abführband 150 abgeführt.

Es wird aus dem Vorhergehenden deutlich, daß die an sich konstruktiv einfachen erfindungsgemäßen Maßnahmen nicht nur eine perfekte Bandführung zur Folge haben, sondern auch, daß das Vorhandensein des durchhängenden, ablaufenden Bandtrumms interessante Anwendungsmöglichkeiten bietet.

Lediglich einige Ausführungsbeispiele der gleitenden Bremsvorrichtung sind beschrieben, jedoch wird der Fachmann, innerhalb des Rahmens der Erfindung bleibend, problemlos geeignete alternative Anwendungsmöglichkeiten in Betracht ziehen.

## Patentansprüche

1. Förderbandeinheit mit einem endlosen, über eine erste und eine zweite, sich quer zur Transportrichtung erstreckende Abstützung geführten Förderband, das mit einer stromaufwärts gelegenen Antriebseinrichtung (6,8) und Bandführungsmitteln (28) zusammenwirkt,
gekennzeichnet durch eine stromabwärts liegende Vorrichtung (20,24) zum Ausüben eines Bremsmomentes auf das auflaufende Trum (2a) des Bandes derart, daß in diesem Trum (2a) zwischen der Bremsvorrichtung und der Antriebseinrichtung eine Zugspannung eintritt, wobei die Bandlänge derart gewählt ist, daß das zwischen der Antriebseinrichtung und der Bremsvorrichtung befindliche rücklaufende Trum (2b) des Bandes spannungslos ist und die Bandführungsmittel (28) der Einrichtung zum Ausüben des Bremsmomentes in Bezug auf die Laufrichtung des Bandes vorgeordnet sind.

2. Vorrichtung nach Anspruch 1, dadurch gekennzeichnet, daß das Band über den Außenumfang einer ersten, stromabwärts gelegenen Leitrolle (20) und den Außenumfang einer zweiten, stromaufwärts gelegenen Leitrolle (6) geführt wird, jeweils eine dieser Leitrollen mit einer stromabwärts liegenden ersten Preßrolle (24) und einer zweiten stromaufwärts liegenden Preßrolle (12) zusammenwirkt, und das Band zwischen den jeweiligen Leitrollen und Preßrollen geführt wird.

3. Vorrichtung nach Anspruch 1 oder 2, dadurch gekennzeichnet, daß das Band am stromaufwärts gelegenen Ende über eine bewegliche Abstützung (74) geführt wird und die stromaufwärts liegende Leitrolle (78) mit der damit zusammenwirkenden Preßrolle (80) sich im Bereich zwischen dieser Abstützung und der stromabwärts liegenden Leitrolle (82) befinden.

4. Vorrichtung nach einem der Ansprüche 1 bis 3, dadurch gekennzeichnet, daß die Vorrichtung für das Ausüben eines Bremsmomentes auf das auflaufende Trumm (2a) gebildet wird durch die Kombination eines mit der stromabwärts gelegenen Leitrolle (20'), oder mit der damit zusammenwirkenden Preßrolle gekoppelten ersten Antriebrads (20') und eines mit der stromaufwärts gelegenen Leitrolle (6'), oder mit der damit zusammenwirkenden Preßrolle gekoppelten zweiten Antriebrads (6''), dessen Durchmesser kleiner ist als der des ersten Antriebrades (20'), wobei beide Antriebräder durch einen unter Vorspannung stehenden Treibriemen (50) aneinander gekoppelt sind.

5. Vorrichtung nach Anspruch 4, dadurch gekennzeichnet, daß die Vorspannung (52) des Antriebsriemens (50) einstellbar (60,62) ist.

6. Vorrichtung nach einem der Ansprüche 1 bis 4, dadurch gekennzeichnet, daß die stromabwärts gelegene Leitrolle (20), beziehungsweise die damit zusammenwirkende Preßrolle gekoppelt ist mit zwei, über 90° verschobenen Kurbelzapfen (34), die jeweils mit der Kolbenstange (38) eines pneumatischen Dämpfungszylinders (42) gekoppelt sind.

7. Vorrichtung nach einem der Ansprüche 1-6, dadurch gekennzeichnet, daß die Positionierungsmittel aus an beiden Seiten des Bandes angeordneten Führungskörpern (28,86) bestehen, die in Bandbewegungsrichtung stromaufwärts der stromabwärts gelegenen Leitrolle sich befinden.

8. Vorrichtung nach einem der Ansprüche 1 bis 7, dadurch gekennzeichnet, daß das auflaufende Bandtrum (2a) über dem rücklaufenden Bandtrum (2b) liegt.

9. Vorrichtung nach einem der Ansprüche 1-7, dadurch gekennzeichnet, daß das rücklaufende Bandtrum (90b) über dem auflaufenden Bandtrum (90a) liegt.

10. Vorrichtung nach Anspruch 9, dadurch gekennzeichnet, daß das rücklaufende Bandtrum (90b) durch Stützrollen (92a.....92f) abgestützt wird.

## Claims

1. Conveying-belt unit with an endless conveying belt which is guided over a first and a second support extending transversely to the transporting direction and interacts with an upstream drive device (6, 8) and belt-guiding means (28), characterized by a downstream device (20, 24) for exerting a braking torque on the incoming strand (2a) of the belt such that tensile stressing occurs in said strand (2a) between the braking device and the drive device, the length of the belt being selected such that the returning strand (2b) of the belt, said strand being located between the drive device and the braking device, is relieved of any stressing, and the belt-guiding means (28) being arranged upstream of the device for exerting the braking torque, as seen in the running direction of the belt.

2. Apparatus according to Claim 1, characterized in that the belt is guided over the outer circumference of a first, downstream directing roller (20) and the outer circumference of a second, upstream directing roller (6), in each case one of these directing rollers interacts with a downstream, first pressing roller (24) and a second, upstream pressing roller (12), and the belt is guided between the respective directing rollers and pressing rollers.

3. Apparatus according to Claim 1 or 2, characterized in that, at the upstream end, the belt is guided over a movable support (74), and the upstream directing roller (78) with the pressing roller (80) which interacts therewith are located in the region between said support and the downstream directing roller (82).

4. Apparatus according to one of Claims 1 to 3, characterized in that the device for exerting a braking torque on the incoming strand (2a) is formed by the combination of a first drive wheel (20'), which is coupled to the downstream directing roller (20') or to the pressing roller which interacts therewith and of a second drive wheel (6''), which is coupled to the upstream directing roller (6'), or to the pressing roller which interacts therewith, and whose diameter is smaller than that of the first drive wheel (20'), the two drive wheels being coupled to one another by a drive belt (50) which is subjected to prestressing.

5. Apparatus according to Claim 4, characterized in that the prestressing (52) of the drive belt (50) can be adjusted (60, 62).

6. Apparatus according to one of Claims 1 to 4, characterized in that the downstream directing roller (20) or the pressing roller which interacts therewith is coupled to two crank pins (34), displaced over 90°, which are each coupled to the piston rod (38) of a pneumatic damping cylinder (42).

7. Apparatus according to one of Claims 1-6, characterized in that the positioning means comprise guide bodies (28, 86) which are arranged on both sides of the belt and are located upstream of the downstream directing roller, as seen in the belt-movement direction.

8. Apparatus according to one of Claims 1 to 7, characterized in that the incoming belt strand (2a) is located above the return belt strand (2b).

9. Apparatus according to one of Claims 1-7, characterized in that the return belt strand (90b) is located above the incoming belt strand (90a).

10. Apparatus according to Claim 9, characterized in that the return belt strand (90b) is supported by supporting rollers (92a.....92f).

## Revendications

1. Unité de convoyage comprenant une bande transporteuse sans fin guidée à travers un premier organe et un deuxième organe de support s'étendant transversalement par rapport à la direction de convoyage, bande transporteuse qui coopère avec un dispositif d'entraînement (6,8) situé en amont et avec des moyens (28) de guidage de la bande, caractérisée par un dispositif (20,24), situé en aval, pour exercer un moment de freinage sur la partie menante (2a) de la bande, de telle sorte qu'une contrainte de traction se produit dans cette partie (2a) de la bande située entre le dispositif de freinage et le dispositif d'entraînement, la longueur de la bande étant choisie de telle sorte que la partie menée (2b) de la bande se trouvant entre le dispositif d'entraînement et le dispositif de freinage soit sans contrainte et en ce que les moyens (28) de guidage de la bande du dispositif pour exercer le moment de freinage sont disposés en amont par rapport à la direction de déplacement de la bande.

2. Unité selon la revendication 1, caractérisée en ce que la bande est guidée sur le pourtour extérieur d'un premier rouleau de renvoi (20) situé en aval et sur le pourtour extérieur d'un deuxième rouleau de renvoi (6) situé en amont, respectivement un de ces rouleaux de renvoi coopérant avec un premier rouleau presseur (24) disposé en aval et un deuxième rouleau presseur (12) disposé en amont, et en ce que la bande est guidée entre les rouleaux de renvoi et les rouleaux presseurs respectifs.

3. Unité selon la revendication 1 ou 2, caractérisé en ce que la bande est guidée à son extrémité située en amont sur un support mobile (74) et en ce que le rouleau de renvoi (78) disposé en amont et le rouleau presseur (80) coopérant avec celui-ci se trouvent dans la zone située entre ce support et le rouleau de renvoi (82) situé en aval.

4. Unité selon l'une quelconque des revendications 1 à 3, caractérisée en ce que le dispositif pour exercer un moment de freinage sur la partie menante (2a) de la bande est formée par la combinaison d'une première roue d'entraînement (20') couplée au rouleau de renvoi (20) disposé en aval ou couplée au rouleau presseur coopérant avec ce rouleau de renvoi, et une deuxième roue d'entraînement (6'') couplée au rouleau de renvoi (6') disposé vers l'amont ou couplée au rouleau presseur coopérant avec ce rouleau de renvoi, le diamètre de la deuxième roue d'entraînement étant inférieur à celui de la première roue d'entraînement (20'), les deux roues d'entraînement étant couplées l'une à l'autre par une courroie précontrainte d'entraînement (50).

5. Unité selon la revendication 4, caractérisée en ce que la précontrainte (52) de la courroie d'entraînement (50) peut être réglée (60,62).

6. Unité selon l'une quelconque des revendications 1 à 4, caractérisée en ce que le rouleau de renvoi (20) disposé vers l'amont ou le rouleau presseur coopérant avec celui-ci, est couplé à deux manetons de bielle articulée (34) décalés de 90° qui sont couplés chacun à la tige (38) de piston d'un cylindre (42) d'amortissement pneumatique.

7. Unité selon l'une quelconque des revendications 1 à 6, caractérisée en ce que les moyens de positionnement sont formés par des corps de guidage (28,86) agencés des deux côtés de la bande, corps de guidage qui se trouvent en direction du mouvement de la bande en amont du rouleau de renvoi disposé en aval.

8. Unité selon l'une quelconque des revendications 1 à 7, caractérisée en ce que la partie menante (2a) de la bande est disposée au-dessus de la partie menée (2b) de la bande.

9. Unité selon l'une quelconque des revendications 1 à 7, caractérisée en ce que la partie menée (90b) de la bande est disposée au-dessus de la partie menante (90a) de bandes.

10. Unité selon la revendication 9, caractérisée en ce que la partie menée (90b) de la bande est supportée par des rouleaux de support (92a ....., 92f).
